# EUROPEAN PATENT APPLICATION

(11) **EP 1 396 989 A2**
(43) Date of publication of application: **10.03.2004**
(21) Application number: 03018649.8
(22) Date of filing: 20.08.2003
(51) Int. Cl.: H04M 3/42

(54) **Communication terminal device, telephone unit, system and method to notify caller information, as well as the corresponding programm and storage medium**

(30) Priority: 04.09.2002 JP 2002258363; 18.06.2003 JP 2003172716
(71) Applicant: NEC CORPORATION, Tokyo (JP)
(72) Inventor: Tokudome, Hirofumi, NEC Corporation, Minato-ku, Tokyo (JP)
(74) Representative: VOSSIUS & PARTNER

(57) **Abstract**

A telephone unit (1) capable of checking a caller information even upon incoming call from a caller not registered on a telephone directory of the telephone unit, can be provided. Upon receipt of incoming call notice of a voice call, a voice communication portion (11) obtains a telephone number of the caller from incoming call information by a caller number obtaining portion (12). The telephone number obtained by the caller number obtaining portion is fed to the caller retrieving portion (13). When the caller information cannot be found, the caller retrieving portion feeds the telephone number to a data communication portion (15) to transmit a caller information retrieval request including the telephone number of the caller to a caller information retrieving system connected to internet from the data communication portion (15). A display portion (16) displays the telephone information and the caller information obtained from the caller retrieving portion (13) or the data communication portion (15).

## Description

The present application has been filed with claiming priority based on Japanese Patent Applications No. 2002-258363, filed on September 4, 2002 and No. 2003-172716, filed on June 18, 2003. Disclosure of the above-identified Japanese Patent Application is herein incorporated by reference.

The present invention relates generally to a communication terminal device, a telephone unit, a caller information notifying system, a caller information notifying method used therefor, and a storage medium recording program therefor. More particularly, the invention relates to a method for retrieving a caller information, such as caller name or the like based on a caller' s telephone number and notifying a retrieved caller information.

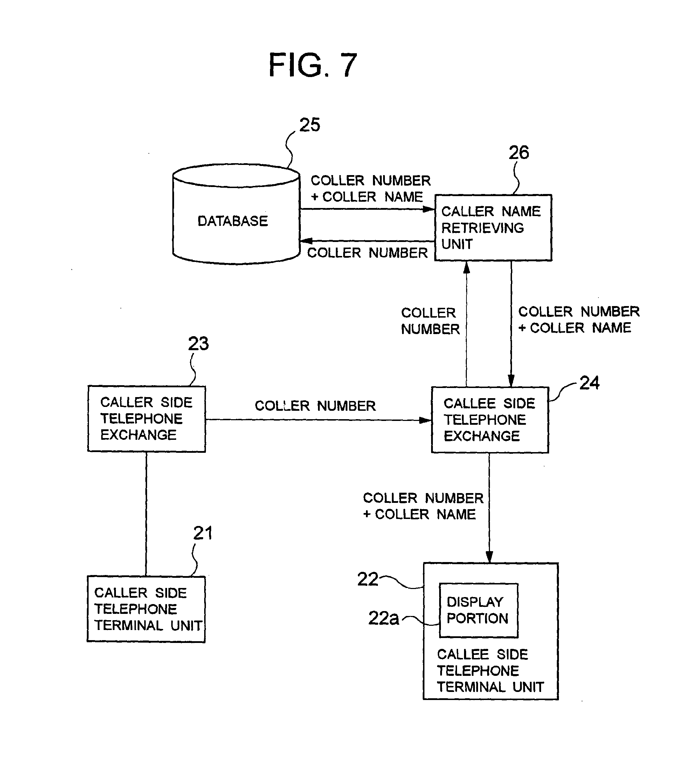

As shown in Fig. 7, the conventional caller notifying system is constituted of a caller side telephone terminal unit 21, a callee side telephone terminal unit 22, a caller side telephone exchange 23, a callee side telephone exchange 24, a database 25 and a caller name retrieving system 26. The database 25 stores data of callers' names corresponding to callers' telephone numbers in the telephone exchange. The caller name retrieving system 26 retrieves the caller's name from the database 25.

The callee side telephone exchange 24 feeds the telephone number of the caller to the caller name retrieving system 26 and receives the caller's telephone number and corresponding caller's name from the caller name retrieving system 26. A display unit 22a of the callee side telephone terminal unit 22 receives and displays the caller's telephone number from the callee side telephone exchange 24 and the corresponding caller's name (For example, refer to JP-A-11-127236).

Since the foregoing conventional caller notifying system implements all mechanism of retrieval of the caller information within a network of a carrier, substantial change of mechanism in the network of the carrier becomes necessary.

Also, since the conventional caller notifying system is a closed system in the network of the carrier, the caller name retrieving system retrieving the caller information cannot be selected from owner of the telephone unit.

The present invention has been worked out in view of the drawbacks in the prior art set forth above. It is therefore an object of the present invention to provide a communication terminal device, a telephone unit, a caller information notifying system, a caller information notifying method used therefor, and a storage medium recording program therefor, which can check a caller information even upon incoming call from a caller who is not registered in a telephone directory of a telephone unit.

According to the first aspect of the present invention, a communication terminal equipment comprises:
data communication means for communication with internet;
obtaining means for obtaining identifying information identifying a caller from call incoming information of incoming call notice;
retrieving means for retrieving caller information relating to the caller on the basis of the identifying information obtained by the obtaining means;
means for transmitting an obtaining request of the caller information to the internet from the data communication means when the caller information is not found; and
means for displaying the caller information retrieved by the retrieving means and the caller information obtained from the internet by feeding the obtaining request.

According to the second aspect of the present invention, a telephone unit comprises:
data communication means for communication with internet;
obtaining means for obtaining telephone number identifying a caller from call incoming information of incoming call notice;
retrieving means for retrieving caller information relating to the caller on the basis of the telephone number obtained by the obtaining means;
means for transmitting an obtaining request of the caller information to the internet from the data communication means when the caller information is not found; and
means for displaying the caller information retrieved by the retrieving means and the caller information obtained from the internet by feeding the obtaining request.

According to the third aspect of the present invention, a caller information notifying system comprises:
a caller information retrieving system connected to internet and retrieving a caller information relating to the caller on the basis of identifying information identifying the caller; and
a communication terminal equipment including:
   data communication means for communication with internet;
   obtaining means for obtaining identifying information identifying a caller from call incoming information of incoming call notice;
   retrieving means for retrieving caller information relating to the caller on the basis of the identifying information obtained by the obtaining means;
   means for transmitting an obtaining request of the caller information to the internet from the data communication means when the caller information is not found; and
   means for displaying the caller information retrieved by the retrieving means and the caller information obtained from the internet by feeding the obtaining request.

According to the fourth aspect of the present invention, a caller information notifying system comprises:
a caller information retrieving system connected to internet and retrieving a caller information relating to the caller on the basis of identifying information identifying the caller; and
a telephone unit including:
   data communication means for communication with internet;
   obtaining means for obtaining telephone number identifying a caller from call incoming information of incoming call notice;
   retrieving means for retrieving caller information relating to the caller on the basis of the telephone number obtained by the obtaining means;
   means for transmitting an obtaining request of the caller information to the internet from the data communication means when the caller information is not found; and
   means for displaying the caller information retrieved by the retrieving means and the caller information obtained from the internet by feeding the obtaining request.

According to the fifth aspect of the present invention, a caller information notifying method of a communication terminal equipment including data communication means for communication with internet, comprises:
step of obtaining identifying information identifying a caller from call incoming information of incoming call notice;
step of retrieving caller information relating to the caller on the basis of the identifying information obtained by the obtaining means;
step of transmitting an obtaining request of the caller information to the internet from the data communication means when the caller information is not found; and
step of displaying the caller information retrieved by the retrieving means and the caller information obtained from the internet by feeding the obtaining request.

According to the sixth aspect of the present invention, a caller information notifying method of a telephone unit including data communication means for communication with internet, comprises:
step of obtaining telephone number identifying a caller from call incoming information of incoming call notice;
step of retrieving caller information relating to the caller on the basis of the telephone number obtained by the obtaining means;
step of transmitting an obtaining request of the caller information to the internet from the data communication means when the caller information is not found; and
step of displaying the caller information retrieved by the retrieving means and the caller information obtained from the internet by feeding the obtaining request.

According to the seventh aspect of the present invention, a storage medium storing a program of a caller information notifying method of a communication terminal equipment including data communication means for communication with internet, comprises:
step of obtaining identifying information identifying a caller from call incoming information of incoming call notice;
step of retrieving caller information relating to the caller on the basis of the identifying information obtained by the obtaining means;
step of transmitting an obtaining request of the caller information to the internet from the data communication means when the caller information is not found; and
step of displaying the caller information retrieved by the retrieving means and the caller information obtained from the internet by feeding the obtaining request.

According to the eighth aspect of the present invention, a storage medium storing a program of a caller information notifying method of a telephone unit including data communication means f or communication with internet , comprises:
step of obtaining telephone number identifying a caller from call incoming information of incoming call notice;
step of retrieving caller information relating to the caller on the basis of the telephone number obtained by the obtaining means;
step of transmitting an obtaining request of the caller information to the internet from the data communication means when the caller information is not found; and
step of displaying the caller information retrieved by the retrieving means and the caller information obtained from the internet by feeding the obtaining request.

Namely, the caller information notifying system according to the present invention permits checking of the caller information even upon incoming call from the caller not registered in the telephone directory of the communication terminal equipments by enabling notifying the caller information relating to the caller, such as name, address and so forth of the caller to a callee , upon incoming call of the communication terminal equipment, such as the telephone unit, e portable communication terminal.

Discussing more particularly, in the caller information notifying system according to the present invention, upon receipt of incoming call notice of voice call, the communication terminal unittransmitsthe caller information retrieval request including the identifying information identifying the caller (for example, telephone number, mail address, discriminating information of the caller) to the caller information retrieving system connected to the internet.

Upon receipt of the caller information retrieval request from the communication terminal unit, the caller information retrieving system performs retrieval of the caller information database and returns the caller information retrieval result database to the communication terminal equipment from the caller information. In the communication terminal equipment, the callee can obtain the caller information by displaying the caller information retrieval result in the communication terminal equipment.

Furthermore, discussing particularly, in the caller information notifying system according to the present invention, upon receipt of incoming call notice of voice call, the telephone unit transmits the caller information retrieval request including the telephone number of the caller to the caller information retrieving system connected to the internet.

Upon receipt of the caller information retrieval request from the telephone unit, the caller information retrieval system performs retrieval of the caller information database and returns the caller information retrieval result to the telephone unit from the caller information database. In the telephone unit, the callee can obtain the caller information by displaying the caller information retrieval result in the telephone unit.

As set forth above, the present invention can be realized using existing infrastructure without requiring changing of mechanism in the network of the carrier. Also, in the present invention, since the caller information retrieval request is transmitted to the caller information retrieval system connected to the internet from the data communication means of the communication terminal equipment, by recording or modifying information of the caller information retrieval system in the communication terminal equipment by the owner thereof, the caller information retrieval request can be transmitted to arbitrarily selected caller information retrieval system. This enables use of caller information database including client information, such as client names, addresses, sizes of transaction, contents of transaction or the like, may be adapted to purposes as the caller information retrieval system to be accessed from the communication terminal unit used in business enterprises.

The present invention will be understood more fully from the detailed description given hereinafter and from the accompanying drawings of the preferred embodiment of the present invention, which, however, should not be taken to be limitative to the invention, but are for explanation and understanding only.

In the drawings:
Fig. 1 is a block diagram showing a construction of one embodiment of a telephone unit according to the present invention;
Fig. 2 is a block diagram showing a construction of one embodiment of a caller information notifying system according to the present invention;
Fig. 3 is a flowchart showing operation of a call receiving process of one embodiment of the telephone unit according to the present invention;
Fig. 4 is a block diagram showing construction of another embodiment of a portable communication terminal according to the present invention;
Fig. 5 is a block diagram showing a construction of another embodiment of a caller information notifying system according to the present invention;
Fig. 6 is a flowchart showing operation of a call receiving process of another embodiment of the portable communication terminal according to the present invention; and
Fig. 7 is a block diagram showing a construction of the conventional caller information notifying system.

The present invention will be discussed hereinafter in detail in terms of the preferred embodiment of a communication terminal device, a telephone unit, a caller information notifying system, a caller information notifying method used therefor, and a storage medium recording program therefor according to the present invention with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to avoid unnecessary obscurity of the present invention.

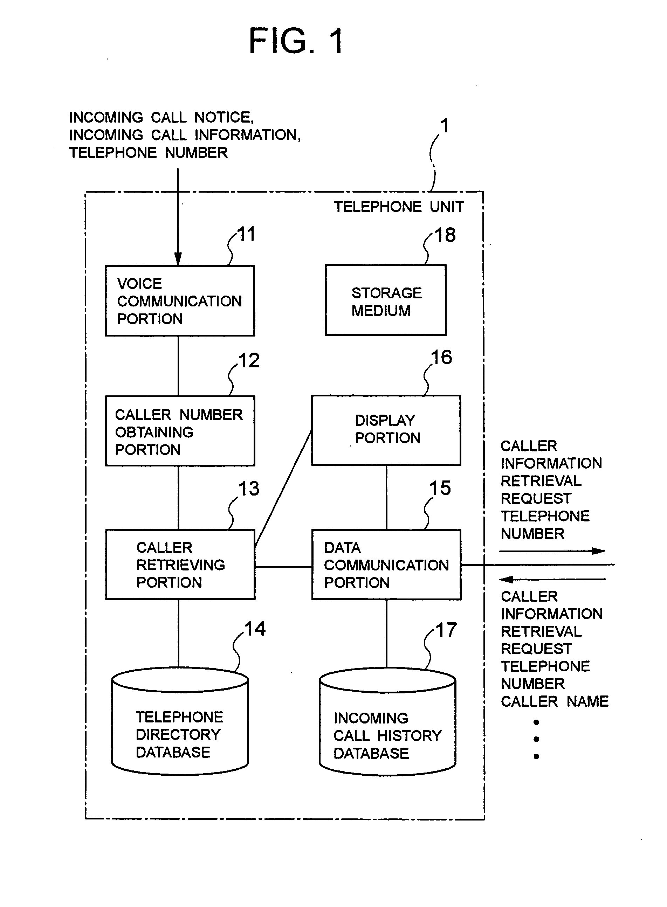

Fig. 1 is a block diagram showing a construction of one embodiment of a telephone unit according to the present invention. In Fig. 1, a telephone unit 1 is constructed with a voice communication portion 11, a caller number obtaining portion 12, a caller retrieving portion 13, a telephone directory database 14, a data communication portion 15, a display portion 16 , an incoming call history database 17 and a storage medium 18.

The voice communication portion 11 performs control of voice communication. The caller number obtaining portion 12 obtains a telephone number of caller from call incoming information of incoming call notification. In the telephone directory database 14, telephone number and caller information (telephone number, caller name and so forth) are accumulated. The caller retrieving portion 13 retrieves caller information of the telephone directory database 14 from the telephone number.

The data communication portion 15 performs communication with not shown internet . The display portion 16 displays the telephone number and the caller information retrieved by the caller retrieving portion 13 or the caller information received by the data communication portion 15 through the internet . The incoming call history database 17 records incoming call history in the telephone unit 1.

In the storage medium 18, a program executable by a computer (not shown) of the telephone unit 1 is stored. Processes in respective of the foregoing portions are realized by the computer reading out the program from the storage medium 18 and executing the same.

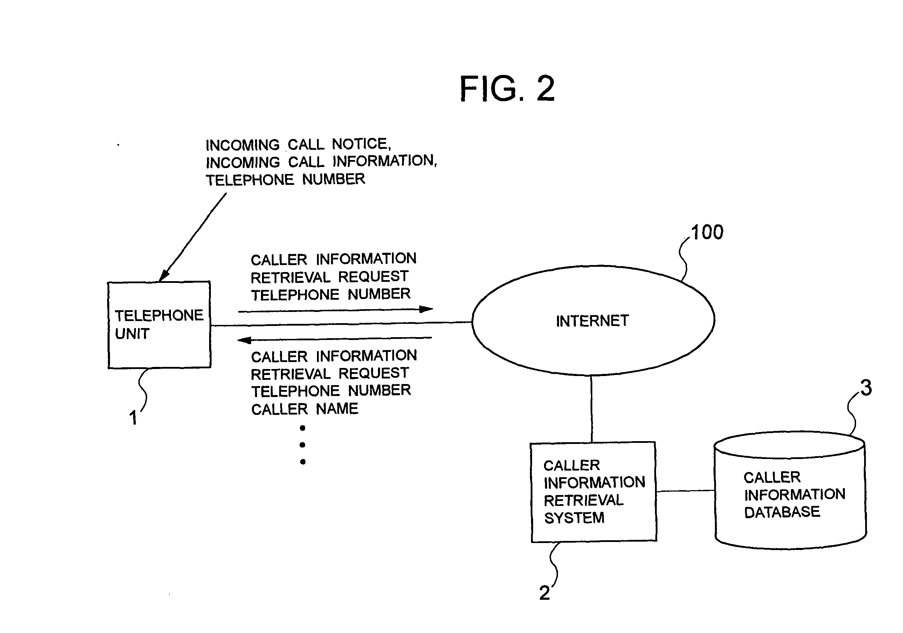

Fig. 2 is a block diagram showing a construction of one embodiment of a caller information notifying system according to the present invention. In one embodiment of the caller information notifying system according to the present invention as illustrated in Fig. 2, the telephone unit 1 can communicate with internet 100. To internet 100, a caller information retrieving system 2 is connected. To the caller information retrieving system 2, a caller information database 3 is connected.

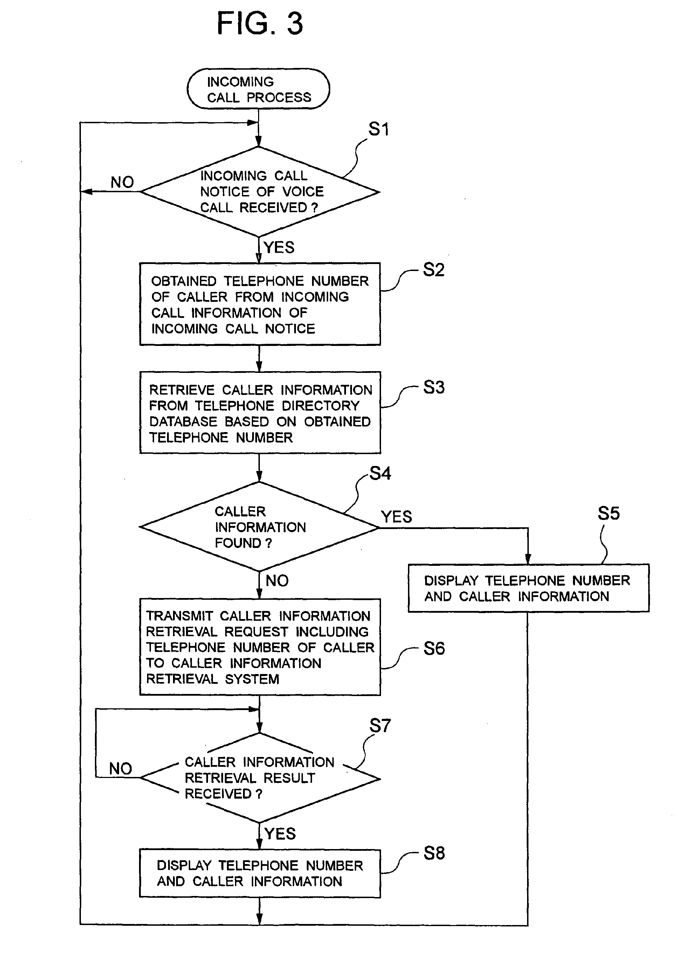

Fig. 3 is a flowchart showing operation of incoming call receiving process of one embodiment of the telephone unit 1 according to the present invention. Referring to Figs. 1 to 3, discussion will be given for operation of incoming call receiving process of one embodiment of the telephone unit 1 according to the present invention. It should be noted that the process shown in Fig. 3 is realized by the computer of the telephone unit 1 reading out the program of the storage medium 18 and executing the same.

Upon receipt of incoming call notice of voice call, the voice communication portion 11 of the telephone unit 1 (step S1 of Fig. 3) feeds incoming call information of incoming call notice to the caller number obtaining portion 12 for obtaining the telephone number of the caller from incoming call information by the caller number obtaining portion 12 (step S2 of Fig. 3).

The telephone number obtained by the caller number obtaining portion 12 is fed to the caller retrieving portion 13. The caller retrieving portion 13 performs retrieval of the caller information from the telephone directory data base 14 on the basis of the telephone number (step S3 of Fig. 3).

Here, once the caller information is found (step S4 of Fig. 3), the caller retrieving portion 13 feeds the caller information to the display portion 16. The display portion 16 displays the telephone number and the caller information (step S5 of Fig. 3).

On the other hand, if the caller information cannot be found through retrieval on the telephone directory database 14, the caller retrieving portion 13 feeds the telephone number to the data communication portion 15 for transmitting a caller information retrieval request including the telephone number of the caller to the caller information retrieving system 2 connected to internet 100 from the data communication portion 15 (step S6 of Fig. 3).

Upon receipt of the caller information retrieval request from the telephone unit 1, the caller information retrieving system 2 performs retrieval of the caller information database 3 on the basis of the telephone number of the caller information retrieval request to return the result of caller information retrieval including the result of retrieval of the caller name and so forth to the telephone unit 1.

Once the caller information retrieval result is received from the caller information retrieving system 2 (step S7 of Fig. 3), the data communication portion 15 of the telephone unit 1 feeds the caller information retrieval result to the display portion 16, and the display portion 16 displays the telephone number and the caller information (step S8 of Fig. 3).

At this time, since data communicating portion 15 also records the caller information from the caller information retrieval system 2 in the incoming call history database 17, it permits checking of the caller information later even when the callee is absent and thus cannot answer to the incoming call.

As set forth above, with the shown embodiment, in case of incoming call from the caller not registered in the telephone directory database 14, the caller information retrieval request is transmitted to the caller information retrieval system 2 connected to the internet 100 and the result is received and displayed on the display portion 16 for obtaining caller information. Therefore, even in case of incoming call from the caller not registered in the telephone directory database 14 of the telephone unit 1, the caller information can be checked.

In the shown embodiment, in the case where incoming call notice is received from the caller not registered in the telephone directory database 14 , the caller information retrieval request is transmitted to the caller information retrieving system 2 connected to internet 100. In case of a typical telephone unit, particularly a cellular telephone, connection to internet 100 frequently takes use-sensitive charge system. Therefore, when incoming call notice is received from the caller not registered on the telephone directory database 14 of the telephone unit 1, a problem can be encountered in operation for necessity of connection to internet 100 every time.

In order to avoid this, when the caller information cannot be found on the telephone directory database 14, the telephone unit 1 retrieves the incoming call history data 17 for displaying the caller information in the incoming call history database 17 for the incoming call notice for which retrieval have already been done in the caller information retrieval system 2 on internet 100 from past incoming call history and thus for avoiding necessity to establish connection with internet 100. By this, in the shown embodiment, frequency of connection to internet can be reduced as small as possible.

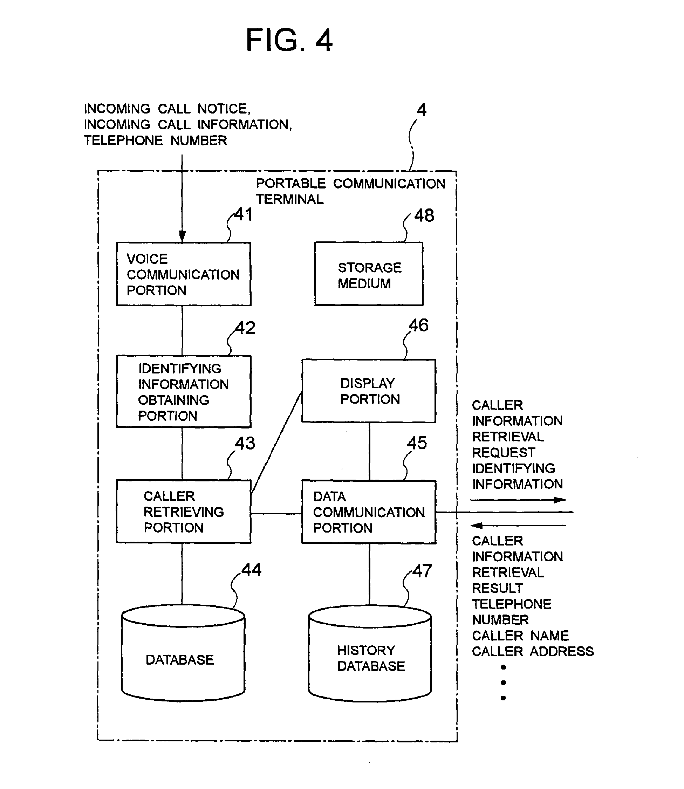

Fig. 4 is a block diagram showing a construction of another embodiment of a portable communication terminal according to the present invention. In Fig. 4, a portable communication terminal 4 is constructed with a voice communication portion 41, a identification information obtaining portion 42, a caller retrieving portion 43, a database 44, a data communication portion 45, a display portion 46, a history database 47 and a storage medium 48.

The voice communication portion 41 performs control of voice communication. The identification information obtaining portion 42 obtains identification information (electronic mail address, telephone number, identification information including identification number, such as a membership number, and so forth) identifying caller from incoming call information in the incoming call. In the database 44, the identification information and caller information (telephone number, caller name, caller address, electronic mail address, identification information including identification number, such as membership number and so forth) are accumulated. The caller retrieving portion 43 retrieves caller information of the database 44 from the identification information.

The data communication portion 45 performs communication with not shown internet. The display portion 46 displays identification information and caller information retrieved by the caller retrieving portion 43 or caller information received by the data communication portion 45 through the internet. The history database 47 records incoming call history or history of electronic mails in the portable communication terminal 4.

In the storage medium 48, a program executable by a computer (not shown) of the portable communication terminal 4 is stored. Processes in respective of the foregoing portions are realized by the computer reading out the program from the storage medium 48 and executing the same.

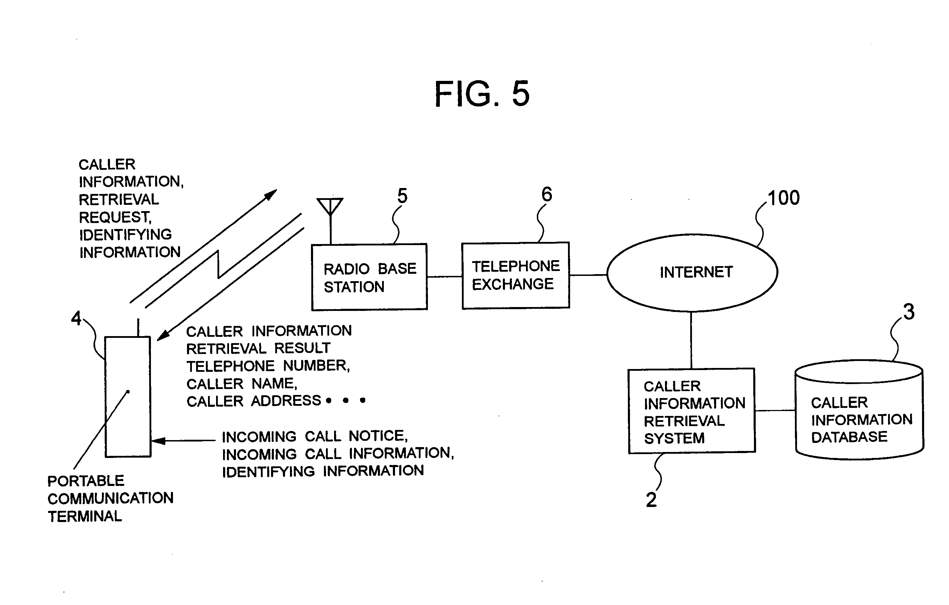

Fig . 5 is a block diagram showing a construction of another embodiment of a caller information notifying system according to the present invention. In another embodiment of the caller information notifying system according to the present invention as illustrated in Fig. 5, the portable communication terminal 4 can communicate with internet 100 via a radio base station 5 and a telephone exchange 6. To internet 100, a caller information retrieving system 2 is connected. To the caller information retrieving system 2, a caller information database 3 is connected.

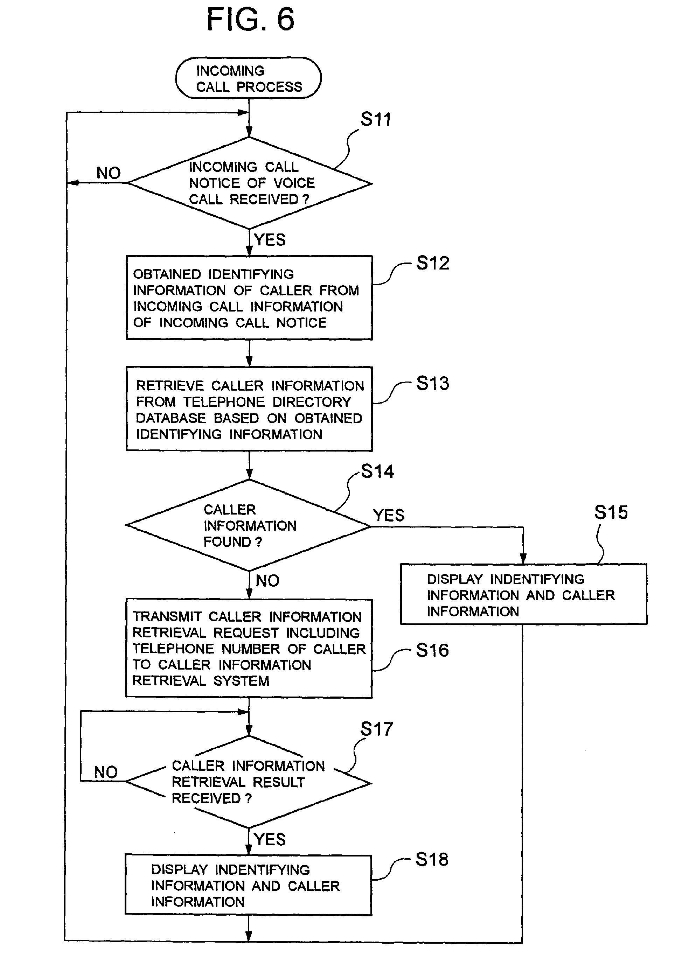

Fig. 6 is a flowchart showing operation of incoming call receiving process of another embodiment of the portable communication terminal 4 according to the present invention. Referring to Figs. 4 to 6 , discussion will be given for operation of incoming call receiving process of another embodiment of the portable communication terminal 4 according to the present invention for a voice call, electronic mail and so forth. It should be noted that the process shown in Fig. 6 is realized by the computer of the portable communication terminal 4 reading out the program of the storage medium 48 and executing the same.

Upon receipt of incoming call notice of voice call, electronic mail or the like, the voice communication portion 41 of the portable communication terminal 4 (step S11 of Fig. 6) feeds incoming call information of incoming call notice to the identification information obtaining portion 42 for obtaining the identification information of the caller from incoming call information by the identification information obtaining portion 12 (step S12 of Fig. 6).

The identification information obtained by the identification information obtaining portion 42 is fed to the caller retrieving portion 43. The caller retrieving portion 43 performs retrieval of the caller information from the telephone directory data base 14 on the basis of the identification information (step S13 of Fig. 6).

Here, once the caller information is found (step S14 of Fig. 6), the caller retrieving portion 43 feeds the caller information to the display portion 46. The display portion 46 displays the identification information and the caller information (step S15 of Fig. 6).

On the other hand, if the caller information cannot be found through retrieval on the database 4 4, the caller retrieving portion 43 feeds the identification information to the data communication portion 45 for transmitting a caller information retrieval request including the telephone number of the caller to the caller information retrieving system 2 connected to internet 100 from the data communication portion 45 (step S16 of Fig. 6).

Upon receipt of the caller information retrieval request from the portable communication terminal 4, the caller information retrieving system 2 performs retrieval of the caller information database 3 on the basis of the identification information of the caller information retrieval request to return the result of caller information retrieval including the result of retrieval of the caller name and so forth to the portable communication terminal 4.

Once the caller information retrieval result is received from the caller information retrieving system 2 (step S17 of Fig. 6), the data communication portion 45 of the portable communication terminal 4 feeds the caller information retrieval result to the display portion 46, and the display portion 46 displays the identification information and the caller information (step S18 of Fig. 6).

At this time, since data communicating portion 45 also records the caller information from the caller information retrieval system 2 in the history database 47, it permits checking of the caller information later even when the callee is absent and thus cannot answer to the incoming call.

As set forth above, with the shown embodiment, in case of incoming call from the caller not registered in the database 44, the caller information retrieval request is transmitted to the caller information retrieval system 2 connected to internet 100 and the result is received and displayed on the display portion 46 for obtaining caller information. Therefore, even in case of incoming call from the caller not registered in the database 44 of the portable communication terminal 4, the caller information can be checked.

In the shown embodiment, in the case where incoming call notice is received from the caller not registered in the database 44, the caller information retrieval request is transmitted to the caller information retrieving system 2 connected to internet 100. In case of a typical telephone unit, particularly a cellular telephone, connection to internet 100 frequently takes use-sensitive charge system. Therefore, when incoming call notice is received from the caller not registered on the database 44 of the portable communication terminal 4 , a problem can be encountered in operation for necessity of connection to internet 100 every time.

In order to avoid this, when the caller information cannot be found on the database 44, the portable communication terminal 4 retrieves the history data 47 for displaying the caller information in the history database 47 for the incoming call notice for which retrieval have already been done in the caller information retrieval system 2 on internet 100 from past history and thus for avoiding necessity to establish connection with internet 100. By this, in the shown embodiment, frequency of connection to internet can be reduced as small as possible.

As set forth above, the present invention achieves an effect to permit checking of caller information even of the incoming call from the caller not registered in the telephone directory by the construction and operation set forth above.

Although the present invention has been illustrated and described with respect to exemplary embodiment thereof, it shouldbe understood by those skilled in the art that the foregoing and various other changes, omission and additions may be made therein and thereto, without departing from the spirit and scope of the present invention. Therefore, the present invention should not be understood as limited to the specific embodiment set out above but to include all possible embodiments which can be embodied within a scope encompassed and equivalent thereof with respect to the feature set out in the appended claims.

## Claims

1. A communication terminal equipment comprising:
data communication means for communication with internet;
obtaining means for obtaining identifying information identifying a caller from call incoming information of incoming call notice;
retrieving means for retrieving caller information relating to said caller on the basis of said identifying information obtained by said obtaining means;
means for transmitting an obtaining request of said caller information to said internet from said data communication means when said caller information is not found; and
means for displaying said caller information retrieved by said retrieving means and said caller information obtained from said internet by feeding said obtaining request.

2. The communication terminal equipment as set forth in claim 1, which further comprises a database accumulating said identifying information and said caller information, and said retrieving means retrieves said caller information from said database on the basis of said identifying information.

3. The equipment as set forth in claim 1 or 2, which further comprises a history database storing incoming call history to own communication terminal equipment, and said caller information obtained from said internet is stored in said history database.

4. The equipment as set forth in claim 1, 2 or 3,
wherein said identification information includes at least one of electronic mail address of said caller, telephone number and identification information.

5. The equipment as set forth in claim 1, 2, 3 or 4,
which is at least one of a portable communication terminal performing wireless communication on said internet and a telephone unit performing wireless communication with said internet.

6. A telephone unit comprising:
data communication means for communication with internet;
obtaining means for obtaining telephone number identifying a caller from call incoming information of incoming call notice;
retrieving means for retrieving caller information relating to said caller on the basis of said telephone number obtained by said obtaining means;
means for transmitting an obtaining request of said caller information to said internet from said data communication means when said caller information is not found; and
means for displaying said caller information retrieved by said retrieving means and said caller information obtained from said internet by feeding said obtaining request.

7. The telephone unit as set forth in claim 6 , which further comprises a telephone directory database accumulating said telephone number and said caller information of said caller, and said retrieving means retrieves said caller information from said telephone directory database on the basis of said telephone number of said caller.

8. The telephone unit as set forth in claim 6 or 7, which further comprises an incoming call history database storing incoming call history to own telephone unit, and said caller information obtained from said internet is stored in said incoming call history database.

9. A caller information notifying system comprising:
a caller information retrieving system connected to internet and retrieving a caller information relating to said caller on the basis of identifying information identifying said caller; and
a communication terminal equipment including:
data communication means for communication with internet;
obtaining means for obtaining identifying information identifying a caller from call incoming information of incoming call notice;
retrieving means for retrieving caller information relating to said caller on the basis of said identifying information obtained by said obtaining means;
means for transmitting an obtaining request of said caller information to said internet from said data communication means when said caller information is not found; and
means for displaying said caller information retrieved by said retrieving means and said caller information obtained from said internet by feeding said obtaining request.

10. The caller information notifying system as set forth in claim 9, which further comprises a database accumulating said identifying information and said caller information, and said retrieving means retrieves said caller information from said database on the basis of said identifying information.

11. The system as set forth in claim 9 or 10, which further comprises a history database storing incoming call history to own communication terminal equipment, and said caller information obtained from said internet is stored in said history database.

12. The system as set forth in claim 9, 10 or 11,
wherein said identification information includes at least one of electronic mail address of said caller, telephone number and identification information.

13. The system as set forth in claim 9, 10, 11 or 12,
which is at least one of aportable communication terminal performing wireless communication on said internet and a telephone unit performing wireless communication with said internet.

14. A caller information notifying system comprising:
a caller information retrieving system connected to internet and retrieving a caller information relating to said caller on the basis of identifying information identifying said caller; and
a telephone unit including:
data communication means for communication with internet;
obtaining means for obtaining telephone number identifying a caller from call incoming information of incoming call notice;
retrieving means for retrieving caller information relating to said caller on the basis of said telephone number obtained by said obtaining means;
means for transmitting an obtaining request of said caller information to said internet from said data communication means when said caller information is not found; and
means for displaying said caller information retrieved by said retrieving means and said caller information obtained from said internet by feeding said obtaining request.

15. The caller information notifying system as set forth in claim 14, said telephone unit includes a telephone directory database accumulating said telephone number and said caller information, and said retrieving means retrieves said caller information from said telephone directory database on the basis of said telephone number.

16. The system as set forth in claim 14 or 15, said telephone unit includes an incoming call history database storing incoming call history to own telephone unit, and said caller information obtained from said caller information retrieving system is stored in said incoming call history database.

17. A caller information notifying method of a communication terminal equipment including data communication means for communication with internet, comprising:
step of obtaining identifying information identifying a caller from call incoming information of incoming call notice;
step of retrieving caller information relating to said caller on the basis of said identifying information obtained by said obtaining means;
step of transmitting an obtaining request of said caller information to said internet from said data communication means when said caller information is not found; and
step of displaying said caller information retrieved by said retrieving means and said caller information obtained from said internet by feeding said obtaining request.

18. The caller information notifying method as set forth in claim 17, wherein in said step of retrieving said caller information, said caller information is retrieved from database accumulating said identifying information and said caller information on the basis of said identifying information.

19. The method as set forth in claim 17 or 18, wherein said caller information obtained from said internet is stored in a history database storing incoming call history to said communication terminal equipment.

20. The method as set forth in claim 17, 18 or 19, wherein said identification information includes at least one of electronic mail address of said caller, telephone number and identification information.

21. The method as set forth in claim 17, 18, 19 or 20, wherein said communication terminal equipment is at least one of a portable communication terminal performing wireless communication on said internet and a telephone unit performing wireless communication with said internet.

22. A caller information notifying method of a telephone unit including data communication means for communication with internet, comprising:
step of obtaining telephone number identifying a caller from call incoming information of incoming call notice;
step of retrieving caller information relating to said caller on the basis of said telephone number obtained by said obtaining means;
step of transmitting an obtaining request of said caller information to said internet from said data communication means when said caller information is not found; and
step of displaying said caller information retrieved by said retrieving means and said caller information obtained from said internet by feeding said obtaining request.

23. The method as set forth in claim 22, wherein in said step of retrieving said caller information, said caller information is retrieved from database accumulating said telephone number and said caller information on the basis of said telephone number of said caller.

24. The method as set forth in claim 22 or 23, wherein said caller information obtained from said internet is stored in an incoming call history database storing incoming call history to said telephone unit.

25. A storage medium storing a program of a caller information notifying method of a communication terminal equipment including data communication means for communication with internet, comprising:
step of obtaining identifying information identifying a caller from call incoming information of incoming call notice;
step of retrieving caller information relating to said caller on the basis of said identifying information obtained by said obtaining means;
step of transmitting an obtaining request of said caller information to said internet from said data communication means when said caller information is not found; and
step of displaying said caller information retrieved by said retrieving means and said caller information obtained from said internet by feeding said obtaining request.

26. A storage medium storing a program of a caller information notifying method of a telephone unit including data communication means for communication with internet, comprising:
step of obtaining telephone number identifying a caller from call incoming information of incoming call notice;
step of retrieving caller information relating to said caller on the basis of said telephone number obtained by said obtaining means;
step of transmitting an obtaining request of said caller information to said internet from said data communication means when said caller information is not found; and
step of displaying said caller information retrieved by said retrieving means and said caller information obtained from said internet by feeding said obtaining request.
